# EUROPÄISCHE PATENTSCHRIFT

(11) **EP 2 644 448 B1**
(45) Veröffentlichungstag und Bekanntmachung des Hinweises auf die Patenterteilung: **28.11.2018**
(21) Anmeldenummer: 13160284.9
(22) Anmeldetag: 21.03.2013
(51) Int. Cl.: B60P 7/08, B60R 7/00

(54) **Regalsystem**
Shelving system
Système d'étagère

(30) Priorität: 27.03.2012 DE 102012102612
(43) Veröffentlichungstag der Anmeldung: 02.10.2013
(73) Patentinhaber: allsafe GmbH & Co. KG, 78234 Engen (DE)
(72) Erfinder: Lohmann, Detlef, 78234 Engen (DE); König, Matthias, 78234 Engen (DE); Suhr, Christian, 78224 Singen (DE)
(74) Vertreter: Patentanwälte und Rechtsanwalt Weiß, Arat & Partner mbB

(56) Entgegenhaltungen:
- EP-A1- 1 736 364
- DE-A1- 1 964 772
- DE-A1-102010 037 716

## Beschreibung

Die Erfindung betrifft ein Regalsystem nach dem Oberbegriff des Anspruchs 1 und eine Verwendung hierfür.

### Stand der Technik

Hierzu wird auf die DE 10 2010 037 716 A1 hingewiesen, welche eine Vorrichtung zum Sichern von Ladegut zeigt, deren Sicherungselement über ein Gleitelement auf ein Ladegut abgesenkt wird. Das Gleitelement wird hierfür in einer etwa vertikal angebrachten Schiene geführt. Zum Auf- und Abfahren des Gleitelements und somit des Sicherungselements ist jedem Gleitelement ein Motor bzw. eine elektrische Antriebseinheit zugeordnet.

Aus dem Stand der Technik sind verschiedene Regalsysteme bekannt. In diesem Zusammenhang wird auf die DE 10 2007 057 058 A1 verwiesen. Dort ist ein Regalbefestigungssystem beschrieben, das zum Befestigen eines Regals in einem Fahrzeug geeignet ist. Das Regal umfasst zumindest ein Gestänge und eine an dem Gestänge angeordnete, im wesentlichen horizontale Aufnahmeeinheit. Das Regalbefestigungssystem hat ferner zumindest eine in einem Fahrzeug anbringbare Schiene und zumindest ein Eingriffelement, das geeignet ist, mit der Schiene und mit dem Gestänge in lösbarem Eingriff gebracht zu werden.

Nachteilig an dem im Stand der Technik beschriebenen Regalbefestigungssystem ist der Umstand, dass die Einzelteile des Regalbefestigungssystems sehr sperrig und schwer sind. Einmal aufgebaut ist bei dem Regalbefestigungssystem aus dem Stand der Technik nicht vorgesehen, dass es ständig den Erfordernissen angepasst, umgebaut oder abgebaut wird. Die Befestigung der einzelnen Teile miteinander ist sehr umständlich und kompliziert. Selbst bei einem kompletten Abbau steht der Nutzer vor dem Problem, dass die sperrigen Teile im Inneren des Fahrzeugs schwierig verstaut werden können, da sie sehr sperrig sind.

Ausserdem wird auf die DE 40 19 011 A1 verwiesen. Dort ist eine Vorrichtung zum Anordnen von Ladegut in einem Laderaum mit vertikal angeordneten, schienenartigen Profilen und Tragstäben, die an diesen Profilen höhenverstellbar montierbar sind, gezeigt.

Ausserdem ist in der DE 42 15 268 A1 eine Ablage für Kraftfahrzeuge beschrieben, die aus einem Ablagebehälter und einer am Kraftfahrzeug befestigbaren Halterung besteht. Der Ablagebehälter ist in der Halterung schwenkbar und verschliessbar gelagert, um ein Herausfallen von im Ablagebehälter untergebrachten Gegenständen während der Fahrt zu verhindern und den im Kraftfahrzeug vorhandenen Stauraum gut auszunutzen.

Daneben wird ausserdem auf die WO 92/12026 A1 hingewiesen. Dort ist ein Regalsystem zur Verwendung in Lieferwagen gezeigt, wobei zwei in der Länge verstellbare Streben vorhanden sind, die an dem Boden und dem oberen Bereich des Laderaums befestigt sind und zwischen denen in Höhe und Tiefe verstellbare Regalböden lösbar angeordnet werden können. Hierbei handelt es sich aber um sperrige Regalböden aus Stahl oder Aluminium, welche ebenfalls sperrig sind und sich nur schwer platzsparend verstauen lassen.

Weiterhin wird auf die EP 1 736 364 A1 hingewiesen. Diese zeigt eine Laderaumfunktionsvorrichtung für ein Kraftfahrzeug. Diese dient jedoch lediglich der Laderaumaufteilung, wobei die Laderaumaufteilung vorzugsweise durch eine formstabile Platte erfolgen soll, oder der Nutzung zur Ladungssicherung mit einem Netz in einem Personenkraftwagen und nicht als Regalsystem zum Transport von Waren.

### Aufgabe der Erfindung

Aufgabe der Erfindung ist es, ein Regalsystem zu schaffen, welches zum einen gewichts- und platzsparend ist und zum anderen dem Nutzer eine möglichst hohe Flexibilität bietet. In diesem Zusammenhang soll besonders ein einfacher Auf- und Abbau möglich sein. Ausserdem sollen die abgebauten Teile des Regalsystems möglichst wenig Platz in Anspruch nehmen.

### Lösung der Aufgabe

Zur Lösung der Aufgabe führen die Merkmale des Anspruchs 1.

Ein erfindungsgemässes Regalsystem zur Verbindung mit einer Innenwandung eines Fahrzeugs ist durch eine Vertikalstange und einen Netzboden gekennzeichnet. Als Regalsystem kommen verschiedene Begrifflichkeiten parallel zur Anwendung. Neben dem Regalsystem ist jetzt auch denkbar, dass die vorliegende Erfindung als Regalbefestigungssystem oder als ein Regal bezeichnet werden kann. Die Besonderheit liegt darin, dass das erfindungsgemässe Regalsystem zur Verbindung mit einer Innenwandung eines Fahrzeugs geeignet sein soll. Die Verbindung mit der Innenwandung eines Fahrzeugs soll dabei wiederlösbar möglich sein. Wiederlösbar bedeutet in diesem Zusammenhang, dass Teile des Regalsystems oder das gesamte Regalsystem manuell und ohne Einsatz von Werkzeugen an der Innenwandung des Fahrzeugs festgelegt und je nach Bedarf wieder gelöst werden können sollen. Als erfindungsgemässe Innenwandung des Fahrzeugs wird regelmässig die geschlossene Ladefläche eines Transporters angesehen. Es ist aber auch denkbar, dass die Ladefläche eines Lastkraftwagens oder der Stauraum eines Luftfahrzeugs als Innenwandung eines Fahrzeugs angesehen werden können. Das Regalsystem soll erfindungsgemäss im Stauraum des Fahrzeugs zur Anwendung kommen. Hierzu soll eine Verbindung mit der Innenwandung des Fahrzeugs im Bereich des Stauraums durchgeführt werden. Das erfindungsgemässe Regalsystem soll in einem Transporter, Lastkraftwagen, einem Luftfahrzeug oder einem Personenkraftwagen verwendet werden. Als Transporter werden die Transporterfahrzeuge, welche als Kurier-, Express- und Paketdienstfahrzeuge genutzt werden, angesehen. In der Regel handelt es sich hierbei um Fahrzeuge bis 7,5 t, welche der sogenannten Sprinter-Klasse angehören. Hier sind aber auch andere Fahrzeuge denkbar, welche für Kurier-, Express- und Paketdienste eingesetzt werden können. Hierbei ist vorteilhaft, dass das erfindungsgemässe Regalsystem sehr flexibel anwendbar ist und für verschiedenste Arten von Fahrzeugen Anwendung finden kann.

Das erfindungsgemässe Regalsystem besteht in erster Linie aus mindestens zwei Vertikalstangen und einem Netzboden. Der Netzboden besteht aus mehreren Strangelementen, welche derart übereinandergelegt sind, dass eine Netzstruktur entsteht. Die Öffnungen in der Netzstruktur sollen derart vorgesehen sein, dass übliche Pakete, Päckchen oder Briefe, welche in solchen Kurier-, Expressdienst- und Postfahrzeugen versandt werden, nicht durch die Öffnungen fallen können. Das Material der Strangelemente richtet sich in erster Linie nach dem Bedürfnissen des Nutzers. Als Materialien kommen in der Regel Gummibänder, Kunststoffbänder, textile Bänder oder geflochtene und dadurch flexible Metallbänder in Betracht. Vorteilhaft an dem erfindungsgemässen Netzboden ist der Umstand, dass er bei Nicht-Gebrauch einfach zusammengerollt und verstaut werden kann. Sollte der Nutzer aber den Netzboden benötigen, so kann er ihn aus einem verschlossenen Behältnis, beispielsweise im Innern des Fahrzeugs entnehmen und in ein bestehendes Regalsystem als zusätzlichen Regalboden einlegen. Ein weiterer Vorteil des erfindungsgemässen Netzbodens liegt darin, dass die in den Netzboden eingelegten Pakete in der Regel für einige cm in den Netzboden hinein sinken, da die Strangelemente des Netzbodens flexibel und nachgiebig gestaltet sind. Dadurch liegen die zu transportierenden Päckchen bzw. Pakete nicht mehr auf einer blanken Edelstahlplatte, auf der sie nochmals zusätzlich gesichert werden müssten, wie es im Stand der Technik der Fall ist.

Die jeweilige erfindungsgemässe Vertikalstange weist eine Rastierung auf. Die Vertikalstange ist ausserdem derart gestaltet, dass sie endseitig jeweils einen Festleger umfasst, welcher geeignet ist zum lösbaren Befestigen an einer Schiene. Die Schiene wiederum ist an einer Innenwandung angebracht. Bevorzugt ist jeweils eine Schiene an einem Boden der Innenwandung befindlich und eine weitere Schiene an einer Decke der Innenwandung. Als Boden der Innenwandung des erfindungsgemässen Fahrzeugs wird der Bereich angesehen, auf den der Nutzer beim Eintreten in das Fahrzeug tritt. Als Decke der Innenwandung wird der entgegen des Bodens befindliche Bereich angesehen. Die erfindungsgemässe Schiene kann hierbei entweder in den Boden oder die Decke eingelassen sein oder an dem Boden bzw. der Decke angebracht sein. Vorteilhaft hierbei ist der Umstand, dass die am Boden bzw. der Decke fest befindliche Schiene der in die Schiene eingreifenden Vertikalstange einen festen Stand bietet. Bei der Schiene kann es sich um handelsübliche Schienen, wie zum Beispiel eine Airline-Schiene oder dergleichen sein. Es ist für den Nutzer einfach, eine entsprechende Vertikalstange wiederlösbar fest mit der Schiene zu verbinden und dadurch einen sicheren Stand zu erhalten.

In einem weiteren Ausführungsbeispiel kann die Innenwandung eine Vertikalstange auch umfassen. Dies bedeutet, dass der Bereich der Vertikalstange, welcher mit dem erfindungsgemässen Netzboden eine Wirkverbindung eingehen kann, als Teil der Innenwandung ausgebildet ist. Vorteilhaft hierbei ist, dass der Nutzer auf einfache und schnelle Weise, lediglich durch Aufstellen zumindest einer weiteren Vertikalstange eine erste Spannmöglichkeit für den zwischen der in der Innenwandung eingelassenen Vertikalstange und der freistehenden Vertikalstange, welche in die erfindungsgemässe Schiene eingreift, ausführen kann.

Der erfindungsgemässe Netzboden umfasst ausserdem ein Verbindungselement. Das Verbindungselement ist geeignet zur lösbaren Verbindung mit der Vertikalstange. Dies kann im Einzelnen durch ein Haken-Ösen-System geschehen. Es ist aber auch denkbar, dass ein anderes Schlüssel-Schloss-Prinzip oder ein Schnellspannsystem genutzt wird, um den Netzboden durch das Verbindungselement mit der Vertikalstange zu verbinden. Vorteilhaft hierbei ist der Umstand, dass auf einfache und schnelle Weise eine Verbindung zwischen dem Netzboden und der Vertikalstange hergestellt werden kann, die ebenso schnell wieder aufgehoben werden kann. Der Nutzer verliert keine Zeit beim Aufbau des Regalsystems in dem Fahrzeug.

Gemäß der Erfindung umfasst der Netzboden ausserdem einen Wandverbinder. Dieser Wandverbinder kann beispielsweise als ein Kederschiene-Federnut-System ausgeführt sein, so dass der Netzboden lediglich durch Verbinden eines in der Innenwandung eingelassenen Nut-Schienen-Systems erfolgen kann. Andernseits des Wandverbinders umfasst der Netzboden im erfindungsgemässen Ausführungsbeispiel das Verbindungselement, welche eine schnelle und einfache Verbindung mit der Vertikalstange zulässt. Auch hier ist vorteilhaft, dass ein einfaches und schnelles Auf- bzw. Abbauen des Regalsystems möglich ist. Bei Nichtnutzung kann ein erfindungsgemässer Netzboden einfach durch den Wandverbinder an der Wand hängend transportiert werden. Auf diese Weise bedarf es keines zusätzlichen Verräumens des erfindungsgemässen Netzbodens. Bei Bedarf kann dann der Nutzer den Netzboden einfach mit einer aufgestellten Vertikalstange verbinden und somit eine einem Regalboden ähnliche Konstruktion schaffen, auf der wiederum Pakete, Päckchen od. dgl. abgelegt werden kann.

Gemäß der Erfindung wird der Netzboden mit zumindest einer weiteren Vertikalstange verbindbar ausgeführt. Diese bedeutet, dass der Netzboden neben der Vertikalstange mit einer weiteren Vertikalstange verbindbar ist.

Gerade in dem Ausführungsbeispiel, wenn der Netzboden einends mit einem Wandverbinder ausgestattet ist und mit einer Innenwandung direkt verbunden ist und andernends mit zumindest einer Vertikalstange verbunden ist, entsteht auf schnelle und einfache Weise ein vollwertiges Regalsystem entstanden ist, dass beispielsweise Paketen zur Ablage dienen kann.

Die Anzahl der Vertikalstangen, welche mit einem Netzboden verbindbar sind, richtet sich nach den Bedürfnissen des Nutzers und den im Fahrzeug zur Verfügung stehenden Maßen für den Aufbau eines Regalsystems.

In einem anderen Ausführungsbeispiel der Erfindung wird die Vertikalstange mit der weiteren Vertikalstange über einen Querstabilisierer verbunden. Der Querstabilisierer ist als ein Gummiband oder eine Metallstrebe ausgeführt und kann über eine im Ermessen des Fachmanns liegende Art und Weise mit der Vertikalstange und der weiteren Vertikalstange derart verbunden werden, dass sie eine stabilisierende Wirkung auf die Gesamtkonstruktion des Regalsystems hat. Vorteilhaft hierbei ist, dass gerade bei großen Regalsystemaufbauten eine weitere Stabilisierung des Regalsystems erfolgen kann.

Die erfindungsgemässe Verwendung eines Regalsystems zur Verbindung mit der Innenwandung des Fahrzeugs erfolgt durch folgende Schritte:
Eine Vertikalstange wird einends in einer Schiene in einem Boden festgelegt. Die Vertikalstange wird andernends in einer Schiene an einer Decke festgelegt. Ein Netzboden wird mit der Innenwandung verbunden. Der Netzboden wird mit der Vertikalstange verbunden.

Hierbei ist die Reihenfolge der Schritte unerheblich. Es ist auch denkbar, dass zunächst der Netzboden über den Wandverbinder mit einer Innenwandung des Fahrzeugs verbunden wird. Anschliessend können dann die Vertikalstange und die weitere Vertikalstange durch Justieren und Festlegen in der Schiene aufgestellt werden, um dann den Netzboden andernends der Wand des Wandverbinders mit einem jeweils einem Verbindungselement mit der Vertikalstange bzw. der weiteren Vertikalstange zu verbinden und auf diese Weise ein Regalsystem zu erhalten. Der Abbau erfolgt in der umgekehrten Reihenfolge.

Vorteilhaft an dem erfindungsgemässen Regalsystem ist der Umstand, dass die aus Stangenelementen bestehenden Netzböden ein sehr viel geringeres Gewicht aufweisen, als die sonst üblichen Aluminium-Regale. In diesem Zusammenhang sind auch die Kosten für die Herstellung erheblich günstiger und zuletzt ist das erfindungsgemässe Regalsystem leichter und schneller auf- bzw. abbaubar.

### Figurenbeschreibung

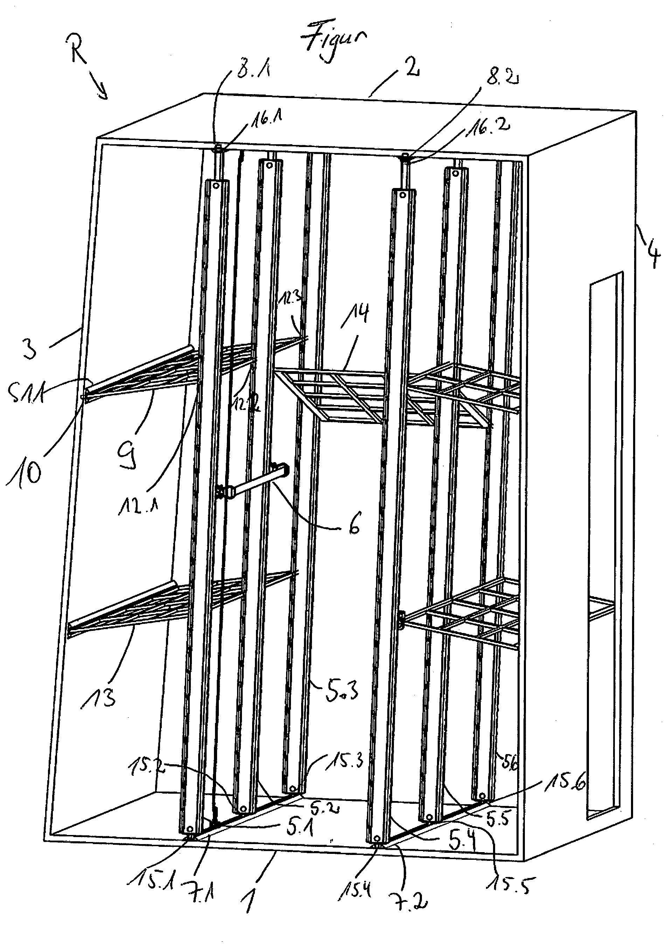

Weitere Vorteile ergeben sich aus der nachfolgenden Beschreibung der Figur, welche im Einzelnen eine Seitenansicht auf ein erfindungsgemässes Regalsystem R aufzeigt.

In dem erfindungsgemässen Regelsystem R ist ein Teil einer Innenwandung des nicht gezeigten Fahrzeugs zu erkennen. Die Innenwandung besteht aus einem Boden 1 und einer Decke 2, sowie einer Seitenwandung 3 und einer weiteren Seitenwandung 4. Daneben findet sich eine Mehrzahl von Vertikalstangen 5.1 bis 5.6, welche eine Verbindung zwischen dem Boden 1 und der Decke 2 darstellen. In dem hier gezeigten Ausführungsbeispiel handelt es sich dabei um sechs Vertikalstangen 5.1 bis 5.6. Diese sechs Vertikalstangen 5.1 bis 5.6 sind teilweise wiederum mit einem Querstabilisierer 6 verbunden. Ausserdem sind sie mit einer ersten Schiene 7.1, 7.2 im Boden 1 verbunden und andernends mit einer zweiten Schiene 8.1, 8.2, welche sich an der Decke 2 befindet. Hierbei ist die Vertikalstange 5.1 mit dem Festleger 15.1 an der Schiene 7.1 festgelegt. In gleicher Weise ist die Vertikalstange 5.2 über einen Festleger 15.2 an der ersten Schiene 7.1 festgelegt und die Vertikalstange 5.3 über einen Festleger 15.3 an der Schiene 7.1 festgelegt. In gleicher Weise ist die Vertikalstange 5.4 über einen Festleger 15.4 an der zweiten Schiene 7.2 und die Vertikalstange 5.5 an der zweiten Schiene 7.2 über einen Festleger 15.5 und die Vertikalstange 5.6 über einen Festleger 15.6 an der zweiten Schiene 7.2 festgelegt. Bei den Festlegern 15.1 bis 15.6 handelt es sich um einfache mit den jeweiligen Schienen 7.1, 7.2 korrespondierende Festlegerfüsse, wie sie im Handel erhältlich und gebräuchlich sind. Ausserdem ist in der Figur noch zu erkennen, wie die Vertikalstange 5.1 an der Schiene 8.1 durch einen Festleger 16.1 und die Vertikalstange an der zweiten Schiene 8.2 über einen Festleger 16.2 festgelegt ist.

Daneben ist gut zu erkennen, wie ein Netzboden 9 über einen Wandverbinder 10, welcher mit einer Schiene 11 an der Seitenwandung 3 befestigt ist, zusammenwirkt. Andernends des Netzbodens 9 ist der Netzboden 9 nicht mit näher gezeigten Verbindungselementen 12.1 bis 12.3 mit den jeweiligen Vertikalstangen 5.1 bis 5.3 verbunden. In gleicher Weise ist ein weiterer Netzboden 13 mit den Vertikalstangen 5.1 bis 5.3 verbunden. Daneben findet sich auch ein Netzboden 14, welche über nicht näher gezeigte Verbindungselement zwischen den Vertikalstangen 5.2, 5.3 und 5.5, 5.6 gespannt ist. Der Netzboden 14 ist hierbei schräg zu den Vertikalstreben 5.3, 5.6 hin eingespannt, so dass reingelegte Pakete eine zusätzliche Sicherung erfahren.

**Bezugszeichenliste**

| | |
|---|---|
| 1 | Boden |
| 2 | Decke |
| 3 | Seitenwandung |
| 4 | weitere Seitenwandung |
| 5 | Vertikalstange |
| 6 | Querstabilisierer |
| 7 | erste Schiene |
| 8 | zweite Schiene |
| 9 | Netzboden |
| 10 | Wandverbinder |
| 11 | Schiene |
| 12 | Verbindungselement |
| 13 | Netzboden |
| 14 | Netzboden |
| 15 | Festleger |
| 16 | Festleger |
| | |
| R | Regalsystem |

## Patentansprüche

1. Regalsystem für einen Stauraum eines Fahrzeugs, wobei das Regalsystem mit einer Innenwandung (1, 2, 3, 4) des Fahrzeugs verbindbar ist und zumindest zwei Vertikalstangen (5.1 bis 5.6) aufweist,
**gekennzeichnet durch**
einen Netzboden (9, 13, 14) sowie **dadurch, dass** die mindestens zwei Vertikalstangen (5.1 bis 5.6) und der Netzboden (9, 13, 14) von der Innenwandung (1, 2, 3, 4) lösbar sind, wobei der Netzboden (9, 13, 14) Verbindungselement (12.1 bis 12.3) umfasst, welche mit den Vertikalstangen (5.1 bis 5.6) verbindbar sind, wobei die Verbindung mit den Vertikalstangen (5.1 bis 5.6) wieder lösbar ist, wobei der Netzboden (9, 13, 14) einen Wandverbinder (10) umfasst, welcher mit der Innenwandung (1, 2, 3, 4) verbindbar ist, wobei die Verbindung mit der Innenwandung (1, 2, 3, 4) lösbar ist.

2. Regalsystem nach Anspruch 1, **dadurch gekennzeichnet, dass** die Vertikalstange (5.1 bis 5.6) jeweils endseitig einen Festleger (15, 16) umfasst, welcher an einer Schiene (7, 8) befestigbar ist, wobei die Befestigung an der Schiene (7, 8) lösbar ist.

3. Regalsystem nach Anspruch 2, **dadurch gekennzeichnet, dass** die Schiene (7, 8) an einem Boden (1) und/oder an einer Decke (2) der Innenwandung (1, 2, 3, 4) befindlich ist.

4. Regalsystem nach einem der vorigen Ansprüche, **dadurch gekennzeichnet, dass** der Netzboden (9, 13, 14) mit zumindest einer weiteren Vertikalstange (5.1 bis 5.6) verbindbar ist.

5. Regalsystem nach Anspruch 4, **dadurch gekennzeichnet, dass** die Vertikalstange (5.1 bis 5.6) mit der weiteren Vertikalstange (5.1 bis 5.6) über einen Querstabilisierer (6) verbindbar ist.

6. Regalsystem nach einem der vorigen Ansprüche, **dadurch gekennzeichnet, dass** die Innenwandung (1, 2, 3, 4) eine der mindestens zwei Vertikalstangen (5.1 bis 5.6) umfasst.

7. Verwendung eines Regalsystems zur Verbindung mit einer Innenwandung (1, 2, 3, 4) eines Fahrzeugs **gekennzeichnet durch** folgende Schritte:
- mindestens zwei Vertikalstangen (5.1 bis 5.6) werden einends in einer Schiene (7) in einem Boden (1) festgelegt,
- die mindestens zwei Vertikalstangen (5.1 bis 5.6) werden andernends in einer Schiene (8) an einer Decke (2) festgelegt,
- ein Netzboden (9, 13, 14) wird mit der Seitenwandung (3, 4) verbunden,
- der Netzboden (9, 13, 14) wird mit den mindestens zwei Vertikalstangen (5.1 bis 5.6) verbunden.

8. Verwendung eines Regalsystems nach einem der Ansprüche 1 bis 6 in einem Transporter, Lastkraftwagen, Luftfahrzeug oder Personenkraftwagen.

## Claims

1. A rack system for a loading space of a vehicle, wherein the rack system is connectable to an inside wall (1, 2, 3, 4) of the vehicle and has at least two vertical rods (5.1 to 5.6),
**characterised by**
a net shelf (9, 13, 14) and in that the at least two vertical rods (5.1 to 5.6) and the net shelf (9, 13, 14) are releasable from the inside wall (1, 2, 3, 4), wherein the net shelf (9, 13, 14) comprises connecting elements (12.1 to 12.3) which are connectable to the vertical rods (5.1 to 5.6), wherein the connection to the vertical rods (5.1 to 5.6) is releasable again, wherein the net shelf (9, 13, 14) comprises a wall connector (10) which is connectable to the inside wall (1, 2, 3, 4), wherein the connection to the inside wall (1, 2, 3, 4) is releasable.

2. The rack system according to Claim 1, **characterised in that** the vertical rod (5.1 to 5.6) comprises a fixing means (15, 16) at each end, which fixing means may be fastened to a rail (7, 8), wherein the fastening to the rail (7, 8) is releasable.

3. The rack system according to Claim 2, **characterised in that** the rail (7, 8) is located on a base panel (1) and/or on a top panel (2) of the inside wall (1, 2, 3, 4).

4. The rack system according to one of the preceding claims, **characterised in that** the net shelf (9, 13, 14) is connectable to at least one further vertical rod (5.1 to 5.6).

5. The rack system according to Claim 4, **characterised in that** the vertical rod (5.1 to 5.6) is connectable to the further vertical rod (5.1 to 5.6) via a transverse stabiliser (6).

6. The rack system according to one of the preceding clams, **characterised in that** the inside wall (1, 2, 3, 4) comprises one of the at least two vertical rods (5.1 to 5.6).

7. The use of a rack system for connecting to an inside wall (1, 2, 3, 4) of a vehicle, **characterised by** the following steps:
- at least two vertical rods (5.1 to 5.6) are fixed in a rail (7) in a base panel (1) at one end;
- the at least two vertical rods (5.1 to 5.6) are fixed in a rail (8) in a top panel (2) at the other end,
- a net shelf (9, 13, 14) is connected to the side wall (3, 4),
- the net shelf (9, 13, 14) is connected to the at least two vertical rods (5.1 to 5.6).

8. The use of a rack system according to one of Claims 1 to 6 in a transporter, heavy goods vehicle, aircraft or car.

## Revendications

1. Système d'étagère pour un espace de rangement d'un véhicule, dans lequel le système d'étagère peut être connecté à une paroi intérieure (1, 2, 3, 4) du véhicule et présente au moins deux barres verticales (5.1 à 5.6),
**caractérisé par**
un fond en forme de filet (9, 13, 14) ainsi que par le fait que les au moins deux barres verticales (5.1 à 5.6) et le fond en forme de filet (9, 13, 14) sont amovibles de la paroi intérieure (1, 2, 3, 4), où le fond en forme de filet (9, 13, 14) comporte des éléments de connexion (12.1 à 12.3) qui peuvent être connectés aux barres verticales (5.1 à 5.6), où la connexion avec les barres verticales (5.1 à 5.6) est à son tour amovible, où le fond en forme de filet (9, 13, 14) comporte un connecteur mural (10) pouvant être connecté à la paroi intérieure (1, 2, 3, 4), où la connexion avec la paroi intérieure (1,2, 3,4) est amovible.

2. Système d'étagère selon la revendication 1, **caractérisé par le fait que** la barre verticale (5.1 à 5.6) comporte à chaque extrémité un élément de fixation (15, 16) qui peut être fixé à un rail (7, 8), la fixation au rail (7, 8) étant amovible.

3. Système d'étagère selon la revendication 2, **caractérisé par le fait que** le rail (7, 8) se situe sur un fond (1) et/ou sur un plafond (2) de la paroi intérieure (1, 2, 3, 4).

4. Système d'étagère selon l'une des revendications précédentes, **caractérisé par le fait que** le fond en forme de filet (9, 13, 14) peut être connecté à au moins une autre barre verticale (5.1 à 5.6).

5. Système d'étagère selon la revendication 4, **caractérisé par le fait que** la barre verticale (5.1 à 5.6) peut être connectée à l'autre barre verticale (5.1 à 5.6) par l'intermédiaire d'un stabilisateur transversal (6).

6. Système d'étagère selon l'une des revendications précédentes, **caractérisé par le fait que** la paroi intérieure (1, 2, 3, 4) comporte l'une des au moins deux barres verticales (5.1 à 5.6).

7. Utilisation d'un système d'étagère pour connexion à une paroi intérieure (1, 2, 3, 4) d'un véhicule, **caractérisée par** les étapes suivantes:
- au moins deux barres verticales (5.1 à 5.6) sont fixées à une extrémité à un rail (7) dans un fond (1),
- les au moins deux barres verticales (5.1 à 5.6) sont fixées à l'autre extrémité à un rail (8) sur un plafond (2),
- un fond en forme de filet (9, 13, 14) est connecté à la paroi latérale (3, 4),
- le fond en forme de filet (9, 13, 14) est connecté aux au moins deux barres verticales (5.1 à 5.6).

8. Utilisation d'un système d'étagère selon l'une des revendications 1 à 6 dans une camionnette, un camion, un avion ou une voiture de tourisme.
